# EUROPEAN PATENT APPLICATION

(11) **EP 2 131 221 A1**
(43) Date of publication of application: **09.12.2009**
(21) Application number: 08157544.1
(22) Date of filing: 04.06.2008
(51) Int. Cl.: G02B 6/26

(54) **Method for Plastic Optical Fiber Alignment**

(71) Applicant: Comoss Electronic Co. Ltd., Shulin Cit Teipei County (TW)
(72) Inventor: Tsai, Eden, Taipei County (TW)
(74) Representative: Viering, Jentschura & Partner

(57) **Abstract**

A method for plastic optical fiber alignment that can fulfill the above objectives is performed with an aligner and two plastic optical fibers. The aligner has a positioning space disposed therein, which is provided with the function of correction for fiber alignment, and a first and a second inlets each disposed on a respective side thereof and communicating with the positioning space. The cladding at an end of each one of the two plastic optical fibers is removed, so as to bare the fibers of the plastic optical fibers. Thus, the two plastic optical fibers can be inserted into the aligner, respectively via the first and the second inlets, so as for the fibers of the two plastic optical fibers to be put in the positioning space, which can be used for precisely aligning the fibers so as to avoid alignment offset. The present method can be used to precisely focus the fibers of the two plastic optical fibers.

## Description

### BACKGROUND OF THE INVENTION

### 1. Field of the invention

The present invention relates to a method for plastic optical fiber alignment and, in particular, to a method for plastic optical fiber alignment that can be used for precisely aligning the fibers of two plastic optical fibers by means of an aligner having a positioning space therein provided with the function of correction.

### 2. Description of the Prior Art

Since current requirement for the channel bandwidth for data or signal transmission is increasingly strong, the technology of optical fiber was developed. The optical fiber is becoming an important medium for network transmission, advantageously characterized by low loss, wide band, non-conductivity, non-inductivity, small size, small bending radius and small weight, etc.

Optical fibers have been applied widely to network transmission. Due to the finite length of an optical fiber, another plastic optical fiber is needed to connect if the present one is not long sufficiently. Thus, the plastic optical fiber can have its length increased to reach where the network is to be established.

The conventional way that plastic optical fibers are aligned cannot be popular one, however. It is rather difficult to align two plastic optical fibers as an entirety. Even though the plastic optical fibers are fusion-spliced to be aligned each other, it is very inconvenient for the operation in situ; moreover, fusion-splicing equipment is very complicated and expensive.

Since the convention has such drawbacks as described above, it is not a good one. An improvement is required urgently.

In view of the above difficulties associated with the conventional way, the present inventor, through a long-term study and practice, has set about the work of improvement and innovation that provides the present method for plastic optical fiber alignment.

### SUMMARY OF THE INVENTION

The primary objective of the present invention is to provide a method for plastic optical fiber alignment that can be used for precisely aligning the fibers of two plastic optical fibers by means of an aligner having a positioning space therein provided with function of correction.

Another objective of the present invention is to provide a method for plastic optical fiber alignment **characterized in that** the fibers of two plastic optical fibers can be precisely aligned with each other so as to reduce optical transport loss as well as to reduce insertion loss.

A method for plastic optical fiber alignment that can fulfill the above objectives is performed with an aligner and two plastic optical fibers. The aligner has a positioning space disposed therein, which is provided with the function of correction for fiber alignment, and a first and a second inlets each disposed on a respective side thereof and communicating with the positioning space. The cladding at an end of each one of the two plastic optical fibers is removed so that the fibers of the plastic optical fibers are bare. Thus, the two plastic optical fibers can be inserted into the aligner, respectively via the first and the second inlets, till the fibers of the two plastic optical fibers are put in the positioning space, which can be used for correcting the fibers so as to precisely align the fibers. The present method is **characterized in that** the fibers of two plastic optical fibers can be precisely aligned with each other so as to reduce optical transport loss as well as to avoid alignment offset.

These features and advantages of the present invention will be fully understood and appreciated from the following detailed description of the drawings.

### BRIEF DESCRIPTION OF THE DRAWINGS

FIG. 1 to FIG 3 are flow charts for the method for plastic optical fiber alignment provided by the present invention.
FIG. 4 and FIG 5 are views for another one embodiment of the present method for plastic optical fiber alignment.

### DESCRIPTION OF THE PREFERRED EMBODIMENT

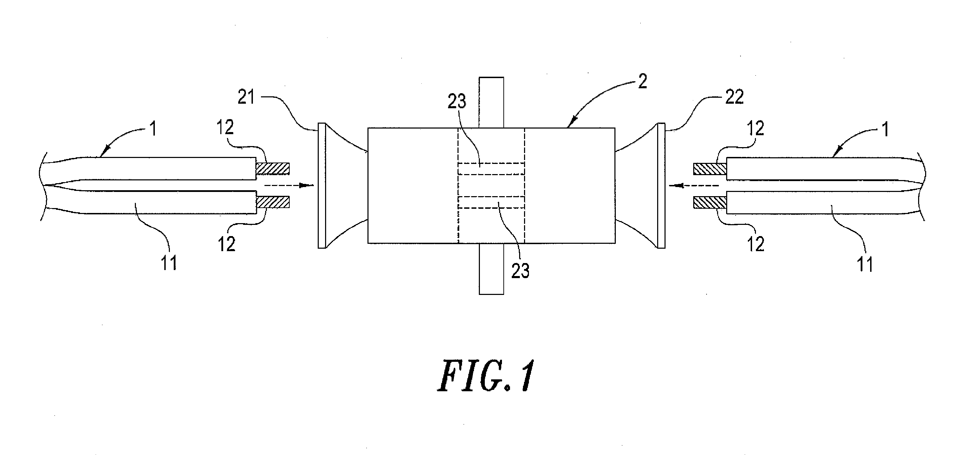

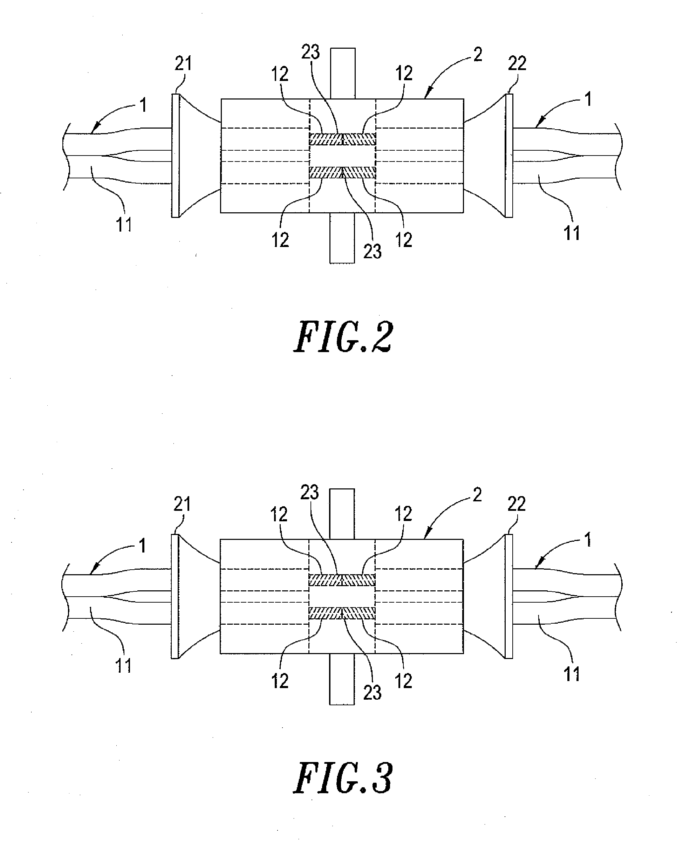

Refer to FIG 1 to FIG 3, which are flow charts for the method for plastic optical fiber alignment provided by the present invention, comprising the following steps. The first step is to provide an aligner 2, which has a first inlet 21 and a second inlet 22 each disposed on a respective side thereof and has a positioning space 23 disposed therein and communicating with the inlets 21, 22. The second step is to remove the cladding at an end of each one of at least two plastic optical fibers 1, so as to bare the end fiber 12 of the plastic optical fiber 1. The third step is to put the at least two plastic optical fibers 1 with bare end fibers 12 into the aligner 2, respectively via the first inlet 21 and the second inlet 22, and position the at least two plastic optical fibers 1 in the positioning space 23 so as to precisely align the fibers 12 of the at least two plastic optical fibers 1, wherein the fibers 12 of the at least two plastic optical fibers 1 are bonded or almost bonded at the end faces thereof to be aligned with each other.

The plastic optical fiber alignment can be accomplished according to the flow of processes as described above.

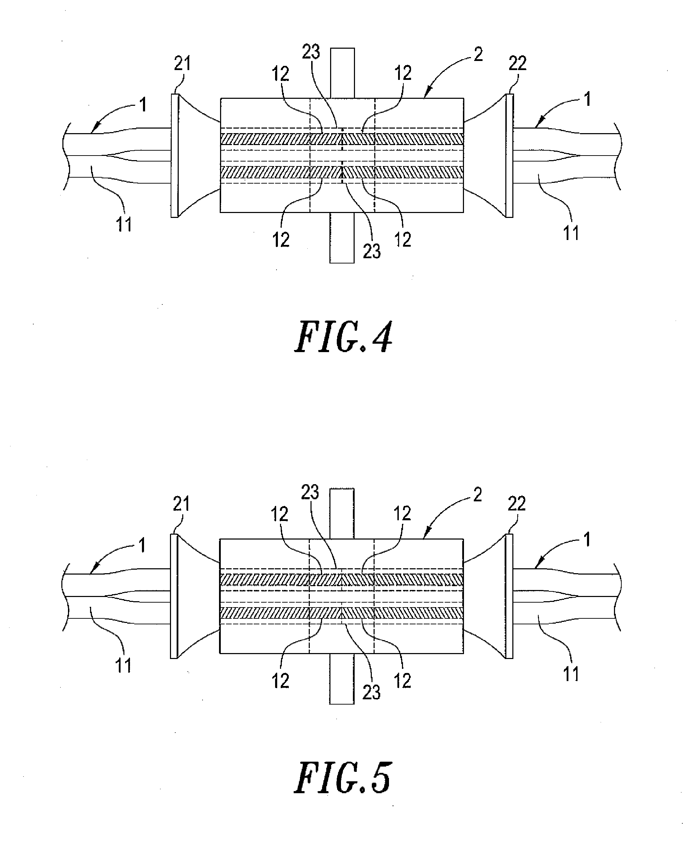

Refer to FIG. 4 and FIG 5, which are views for another one embodiment of the method for plastic optical fiber alignment. As shown in FIG. 4 and FIG 5, the step of removing the cladding 11 at an end of the plastic optical fiber 1 is skipped. Subsequent to the step of providing the aligner 2, the step is performed of inserting the at least two plastic optical fibers 1, respectively via the inlets 21, 22 of the aligner 2, till the at least two plastic optical fibers 1 are put in the positioning space 23. Similarly, the positioning space 23 can be used for correcting the claddings 11 of the plastic optical fibers 1, so that the at least two plastic optical fibers 1 have the fibers 12 aligned directly or indirectly through the claddings 11.

For the plastic optical fibers 1, either the fibers 12 or the claddings 11 can be aligned with each other, whose positions are then corrected by using the positioning space 23. Both ways of plastic optical fiber alignment can make the fibers 12 precisely aligned directly or indirectly. The present invention is characterized by this precise alignment with each other so as to achieve excellent optical transport.

In FIG 1 to FIG 5, the plastic optical fibers 1 being twin-core fibers are only those used in preferable embodiments, but not for limiting the scope, of the present invention. Single-core fibers or multiple-core fibers can be used as well.

The method for plastic optical fiber alignment provided by the present invention, as compared with conventional technologies, has the following advantages.
1. The method can be used for precisely aligning the fibers of two plastic optical fibers by means of an aligner having a positioning space therein provided with function of correction, so that alignment offset can be avoided.
2. The method, as characterized in the precise alignment of the fibers of two plastic optical fibers, can reduce optical transport loss as well as to reduce insertion loss.
   Many changes and modifications in the above described embodiment of the invention can, of course, be carried out without departing from the scope thereof.
   Accordingly, to promote the progress in science and the useful arts, the invention is disclosed and is intended to be limited only by the scope of the appended claims.

## Claims

1. A method for plastic optical fiber 1 alignment comprising steps:
providing an aligner 2, which has inlets 21, 22 each disposed on a respective side thereof and has a positioning space 23 disposed therein and communicating with the inlets 21, 22;
removing the cladding at an end of each one of at least two plastic optical fibers 1, so as to bare the end fiber 12 of the plastic optical fiber 1; and
putting the at least two plastic optical fibers 1 with bare end fibers 12 into the aligner 2, respectively via the inlets 21, 22, and positioning the at least two plastic optical fibers 1 in the positioning space 23 so as to precisely align the fibers 12 of the at least two plastic optical fibers 1.

2. The method for plastic optical fiber 1 alignment according to Claim 1, wherein the fibers 12 of the at least two plastic optical fibers 1 are bonded at the end faces thereof to be aligned with each other.

3. The method for plastic optical fiber 1 alignment according to Claim 1, wherein the fibers 12 of the at least two plastic optical fibers 1 are almost bonded at the end faces thereof to be aligned with each other.

4. A method for plastic optical fiber 1 alignment comprising steps:
providing an aligner 2, which has inlets 21, 22 each disposed on a respective side thereof and has a positioning space 23 disposed there within and communicating with the inlets 21, 22; and
putting the at least two plastic optical fibers into the aligner 2, respectively via the inlets 21, 22, and positioning the at least two plastic optical fibers 1 in the positioning space 23 so as to precisely align the fibers 12 of the at least two plastic optical fibers 1.

5. The method for plastic optical fiber 1 alignment according to Claim 4, wherein the fibers 12 of the at least two plastic optical fibers 1 are bonded at the end faces thereof to be aligned with each other.

6. The method for plastic optical fiber 1 alignment according to Claim 4, wherein the fibers 12 of the at least two plastic optical fibers 1 are almost bonded at the end faces thereof to be aligned with each other.
